# EUROPÄISCHE PATENTSCHRIFT

(11) **EP 2 460 623 B1**
(45) Veröffentlichungstag und Bekanntmachung des Hinweises auf die Patenterteilung: **01.02.2023**
(21) Anmeldenummer: 11009563.5
(22) Anmeldetag: 02.12.2011
(51) Int. Cl.: A01D 34/90, B25F 5/00, B23D 59/00, B24B 23/00, B24B 27/06, B24B 27/08, B26D 5/00, B26D 1/25

(54) **Handgeführtes Arbeitsgerät mit schaltbarer Leistung**
Manually operated tool with adjustable output
Appareil de travail manuel doté d'une puissance commutable

(30) Priorität: 06.12.2010 DE 102010053583
(43) Veröffentlichungstag der Anmeldung: 06.06.2012
(73) Patentinhaber: Andreas Stihl AG & Co. KG, 71336 Waiblingen (DE)
(72) Erfinder: Neubauer, Andreas, 71642 Ludwigsburg (DE); Gegg, Tim, Dr., 71686 Remseck (DE)
(74) Vertreter: Wasmuth, Rolf

(56) Entgegenhaltungen:
- WO-A1-2004/010387
- WO-A2-2006/066259
- GB-A- 2 438 877
- GB-A- 2 466 383

## Beschreibung

Die Erfindung betrifft ein handgeführtes Arbeitsgerät, insbesondere ein tragbares handgeführtes Arbeitsgerät wie eine Motorkettensäge, einen Trennschleifer, ein Freischneidegerät oder dgl. nach dem Oberbegriff des Anspruchs 1.

Handgeführte tragbare Arbeitsgeräte wie z. B. Trennschleifer weisen eine rotierende Trennscheibe auf, die von einem Verbrennungsmotor in einem Drehzahlbereich von 8.000 bis 12.000 Umdrehungen pro Minute angetrieben ist. Die Trennscheibe ist mit einer Schutzhaube versehen, um im Falle eines Trennscheibenbruchs ausreichend Schutz zu bieten. Voraussetzung für einen störungsfreien, sicheren Betrieb bei einem Trennschleifer ist die Verwendung einer qualitativ hochwertigen Trennscheibe, die präzise ausgewuchtet sein muss. Mit hochwertigen Trennscheiben ist ein sicheres Arbeiten über einen langen Zeitraum gewährleistet.

Werden minderwertige Trennscheiben auf Arbeitsgeräten mit hoher Motorleistung eingesetzt, kommt es häufig schon nach kurzer Betriebszeit zu einem Bruch der Trennscheibe.

Die GB 2 466 383 A beschreibt eine Stichsäge, die eine Erfassungsvorrichtung einerseits zum Erfassen des Materials des Werkstücks besitzt und andererseits das verwendete Werkzeug erkennen soll, um automatisch Betriebsdaten wie Hub und/oder Geschwindigkeit des Werkzeugs des Arbeitsgerätes einzustellen.

Die WO 2006/066259 A2 schlägt vor, bei Arbeitsgeräten wie Kreissäge, Bohrer, Stichsäge, Winkelschleifer, Lochsäge und dgl. einen RFID Tag einzusetzen, um nach Erkennung des Werkzeugs die Betriebsvariablen des Antriebs entsprechend einzustellen.

In der GB 2 438 877 A wird vorgeschlagen, die Betriebstemperatur des Werkzeugs zu überwachen. Hierzu ist das Werkzeug mit einem Sender versehen, der die aktuelle Temperatur z. B. eines Bohrers einem Überwachungssystem mitteilt. Entsprechend den auftretenden Temperaturen werden die Antriebsvariablen wie z. B. die Drehzahl des Werkzeugs verändert.

Der Erfindung liegt die Aufgabe zugrunde, bei tragbaren, handgeführten Arbeitsgeräten mit rotierenden, auswechselbaren Arbeitswerkzeugen in Abhängigkeit des verwendeten Werkzeugs die Betriebssicherheit zu erhöhen. Die Aufgabe wird durch ein handgeführtes, tragbares Arbeitsgerät gemäß Anspruch 1 gelöst.

Nach der Erfindung ist vorgesehen, den Betriebsbereich des antreibenden Motors in einen ersten Betriebsmodus mit im Vergleich zu einem weiteren Betriebsmodus verringerter Drehzahl und/oder verringerter Leistung und mindestens einen weiteren, zweiten Betriebsmodus mit im Vergleich zum ersten Betriebsmodus einer erhöhten Drehzahl und/oder erhöhten Leistung aufzugliedern. Die den Motor steuernde Steuereinheit ist so ausgelegt, dass sie in Abhängigkeit eines Freigabesignals zur Steuerung des Betriebs den Motor in einem eingeschränkten Betriebsbereich ausschließlich in dem ersten Betriebsmodus und in einem erweiterten Betriebsbereich in dem weiteren, zweiten Betriebsmodus betreibt. Somit kann in Abhängigkeit eines Freigabesignals die Motorleistung reduziert werden. Das Werkzeug trägt zur Erkennung einen RFID-Tag mit entsprechender Kennung.

Die Steuereinheit ist mit einer Erfassungseinheit verbunden, deren Ausgangssignal das Freigabesignal bildet. Die Erfassungseinheit ist mit einer Leseeinheit verbunden, die eine RFID-Sende- und -Empfangseinheit ist, welche am Arbeitsgerät drehfest angeordnet ist. Die Leseeinheit erfasst die Kennung des am Arbeitsgerät montierten Arbeitswerkzeugs und wertet diese aus. Abhängig von der Auswertung wird das Freigabesignal generiert, um den Motor in dem einen oder anderen Betriebsmodus zu betreiben. Dadurch kann in einfacher Weise erkannt werden, ob ein auf Hochleistung abgestimmtes Werkzeug montiert ist, so dass das Arbeitsgerät im optimalen Betrieb mit voller Leistung im weiteren, zweiten Betriebsmodus betrieben werden kann. Fehlt das Freigabesignal vollständig, schaltet das Steuergerät in einen Sicherheitsmodus. Dieser Sicherheitsmodus kann z. B. der erste Betriebsmodus mit abgesenkter Drehzahl und/oder abgesenkter Leistung sein.

Bei Erfassung der Kennung des RFID-Tags durch die Leseeinheit wird diese mit einer in einem Speicherbaustein, insbesondere in einem Speicherbaustein der Erfassungseinheit abgelegten Kennung verglichen. Entspricht die gelesene Kennung der abgespeicherten Kennung eines zulässigen Arbeitswerkzeugs, werden alle Betriebsmodi des motorspezifischen Betriebsbereichs freigeschaltet. Weicht die eingelesene Kennung von den abgespeicherten, zulässigen Kennungen ab, wird nur der erste Betriebsmodus freigeschaltet und das Arbeitsgerät mit nur reduzierter Leistung betrieben.

Die Leseeinheit ist am Arbeitsgerät drehfest angeordnet, während der RFID-Tag innerhalb des Klemmbereichs eines rotierenden Werkzeugs angeordnet ist. Aufgrund der Rotation des Arbeitswerkzeugs ist sichergestellt, dass der RFID-Tag in den Erfassungsbereich der Leseeinheit gelangt und so die Kennung ausgelesen werden kann.

In einer zweckmäßigen Ausführungsform weist das Steuergerät ausschließlich zwei Betriebsmodi auf. In Abhängigkeit der Wertigkeit des Freigabesignals (z. B. "0" oder " 1 ") als Ergebnis des Vergleichs schaltet das Steuergerät zwischen den beiden Betriebsmodi um.

Weitere Merkmale der Erfindung ergeben sich aus den weiteren Ansprüchen, der Beschreibung und der Zeichnung, in der Ausführungsbeispiele der Erfindung dargestellt sind. Es zeigen:
- Fig. 1: eine schematische Darstellung eines handgeführten Arbeitsgerätes am Beispiel eines Freischneiders,
- Fig. 2: in schematischer Darstellung eine Betriebskurve zur Leistung über der Drehzahl,
- Fig. 3: ein handgeführtes Arbeitsgerät in Form eines Freischneiders mit einem geänderten Werkzeug,
- Fig. 4: ein handgeführtes Arbeitsgerät gemäß Fig. 3 mit einem dritten Werkzeug,
- Fig. 5: eine schematische Ansicht eines Trennschleifers mit einer Trennscheibe,
- Fig. 6: in schematischer Darstellung eine weitere Betriebskurve zur Leistung über der Drehzahl,
- Fig. 7: in schematischer Darstellung eine dritte Betriebskurve zur Leistung über der Drehzahl.

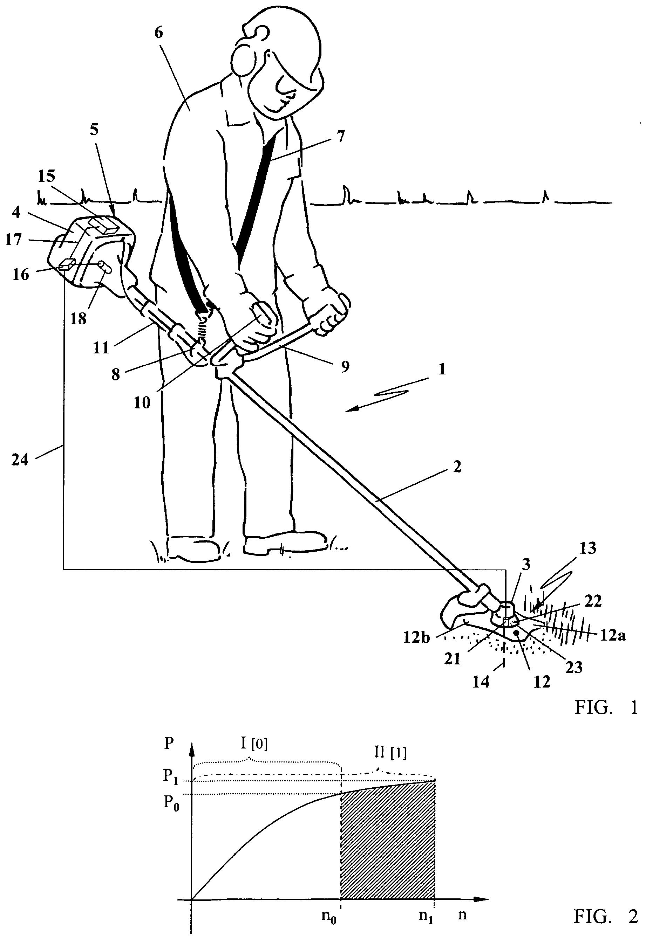

Das in den Figuren 1, 3, 4 dargestellte handgeführte Arbeitsgerät ist als Freischneider ausgeführt; das Arbeitsgerät ist Beispiel für ein beliebiges, tragbares, handgeführtes Arbeitsgerät und könnte auch eine Motorkettensäge, ein Trennschleifer, oder dgl. Arbeitsgerät mit rotierendem Arbeitswerkzeug sein. Als Antriebsmotor in einem derartigen Arbeitsgerät ist ein Elektromotor oder Verbrennungsmotor vorgesehen.

Der dargestellte Freischneider 1 besteht im Wesentlichen aus einem langgestreckten Führungsrohr 2, das an einem Ende einen Getriebekopf 3 und am anderen Ende ein Gehäuse 4 mit einem darin angeordneten Elektromotor oder Verbrennungsmotor 5 aufweist. Der Freischneider 1 wird von einem Benutzer 6 mittels eines Gurtes 7 getragen, der an einer Haltevorrichtung 8 am Führungsrohr 2 eingehakt ist. Am Führungsrohr 2 ist ferner eine Griffanordnung in Form eines Lenkers 9 befestigt, über den der Benutzer den Freischneider 1 sensenartig führt.

Einer der Handgriffe 10 des Lenkers 9 ist als Bediengriff 10 ausgeführt und weist Steuerelemente zur Bedienung des Motors 5 auf, z. B. einen Gashebel zum Betrieb eines Elektromotors oder eines im Gehäuse 4 vorgesehenen Verbrennungsmotors 5. Der Bediengriff 10 ist vorteilhaft über einen Bowdenzug 11 mit den Verstelleinrichtungen am Motor, z. B. einem Verbrennungsmotor 5 verbunden.

Am Getriebekopf 3 ist ein Werkzeug 13 festgelegt, welches um eine Achse 14 rotierend angetrieben ist. Hierzu steht der Getriebekopf 3 über eine im Führungsrohr 2 geführte Antriebswelle mit dem Abtrieb des Motors 5 im Gehäuse 4 in Verbindung.

Das in Fig. 1 als Werkzeug 13 am Getriebekopf drehbar festgelegte Messer 12 ist ein in Draufsicht etwa quadratisches Messerblatt, welches vier Schneidabschnitte aufweist. Jeweils zwei Schneidabschnitte 12a, 12b liegen dabei einander zur Achse 14 diametral gegenüber.

Im Gehäuse 4 ist eine Steuereinheit 15 vorgesehen, die als elektronische Steuereinheit ausgebildet ist und der Steuerung des Motors 5 dient, wobei eine Anpassung der Steuereinheit 15 an die Art des Antriebsmotors 5 (Elektromotor, Verbrennungsmotor) vorgesehen ist. In Abhängigkeit von den Betriebsbedingungen wird über die Steuereinheit 15 z. B. die Zündung des Verbrennungsmotors 5 in Abhängigkeit von der Kurbelwellenwinkellage gesteuert. Die Steuereinheit 15 kann ferner zur Steuerung der Zusammensetzung des Kraftstoff/Luft-Gemisches genutzt werden, indem z. B. über ein elektromagnetisches Ventil die Kraftstoffzufuhr dem Betriebspunkt des Verbrennungsmotors 5 entsprechend eingestellt wird. Die Steuereinheit 15 stellt somit Zündzeitpunkt und Gemisch im Rahmen eines motorspezifischen Betriebsfeldes ein, wie es schematisch in Fig. 2 dargestellt ist. In gleicher Weise kann die Steuerung eines Elektromotors erfolgen, z. B. durch Änderung der Drehzahl (Drehzahlsteller) oder Anpassung des aufgenommenen Stroms (Leistung).

Das Betriebsfeld in Fig. 2 ist als einfache Leistungskurve P (n) über der Drehzahl n dargestellt. Wie in Fig. 2 wiedergegeben, ist in dem Betriebsfeld ein erster, unterer Betriebsmodus I mit verringerter Drehzahl n₀ und/oder verminderter Leistung P₀ vorgesehen sowie ein zweiter Betriebsmodus II, der den gesamten Leistungs- und Drehzahlbereich umfasst. Eine Aufteilung in einen unteren Betriebsmodus I und einen oberen Betriebsmodus II kann vorteilhaft sein. Der zweite Betriebsmodus II hat eine erhöhte Drehzahl n₁ und eine erhöhte Leistung P₁.

Dieses Betriebsfeld steht der Steuereinheit 15 als Einstellbereich zur Verfügung. Dabei ist es vorteilhaft, wenn ausschließlich zwei Betriebsmodi vorgesehen sind, wodurch der technische Aufwand der Umschaltung zwischen den Betriebsmodi einfach gehalten werden kann.

Die Steuereinheit 15 steht mit einer Erfassungseinheit 16 in Verbindung, die über eine Signalleitung 17 ihr Ausgangssignal der Steuereinheit 15 mitteilt. Die Steuereinheit 15 interpretiert das Ausgangssignal der Erfassungseinheit 16 als "Freigabesignal" derart, dass bei einem "Freigabesignal - 0" nur der erste Betriebsmodus I freigegeben ist, die Steuerung 15 also nur ein eingeschränktes Betriebsfeld zur Verfügung hat. In diesem eingeschränkten Betriebsfeld, nämlich dem unteren Betriebsmodus I, ist eine abgesenkte Drehzahl n₀ und/oder eine abgesenkte Leistung P₀ gegeben.

Wechselt das Ausgangssignal das Potenzial, wird dieses als "Freigabesignal - 1" gewertet, worauf die Steuereinheit 15 den zweiten Betriebsmodus II nach Fig. 2 freischaltet, so dass eine erhöhte Drehzahl n₁ und/oder eine erhöhte Leistung P₁ möglich sind.

Fehlt das Freigabesignal vollständig, liegt also weder ein Signal "0" noch ein Signal "1" an, schaltet das Steuergerät in einen Sicherheitsmodus. Dieser Sicherheitsmodus kann z. B. durch einen Betriebsmodus mit abgesenkter Drehzahl und/oder abgesenkter Leistung gebildet sein.

Die Erfassungseinheit 16 kann z. B. in Abhängigkeit von auftretenden Vibrationen und bei Überschreiten eines vorgegebenen Vibrationsschwellwertes das Ausgangssignal (Freigabesignal) auf "0" setzen, um z. B. die Vibrationen für den Benutzer gering zu halten. Hierzu kann die Erfassungseinheit 16 mit einem Vibrationssensor 18 verbunden sein, der an einer geeigneten Stelle des Arbeitsgerätes montiert ist. Erhöhte Vibrationen können z. B. auftreten bei einem schadhaften Messerblatt 12, wodurch der Benutzer einen Hinweis auf die Notwendigkeit des Austauschs des Messerblattes 12 erhält. Andererseits kann so auch sichergestellt werden, dass das mit hohen Umdrehungsgeschwindigkeiten von 8.000 bis 12.000 Umdrehungen pro Minute rotierende Messerblatt 12 ein qualitativ hochwertiges, präzise ausgewuchtetes Werkzeug ist. Nur wenn ein derartiges präzises, hochwertiges Werkzeug am Getriebekopf 3 montiert ist und die Vibrationen gering sind, lässt die Anordnung eine Arbeit über das gesamte Betriebsfeld des Motors 5 zu.

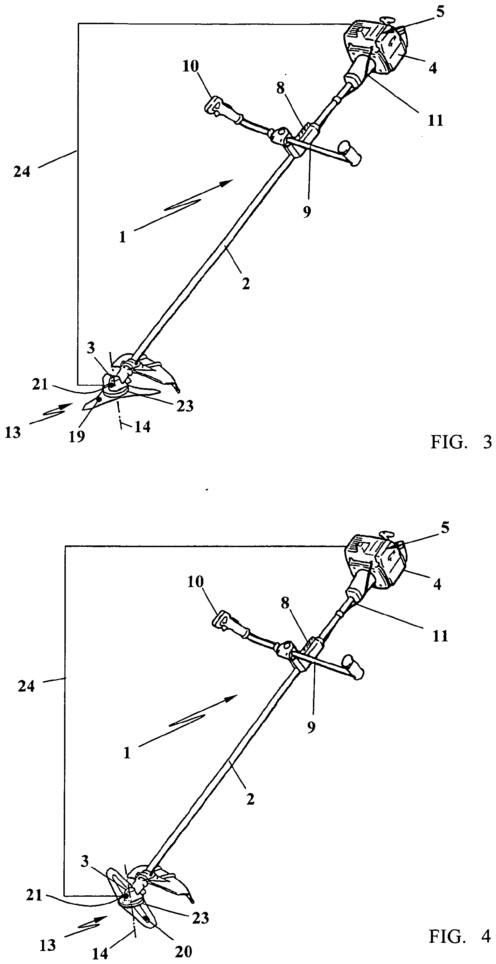

In Fig. 3 ist ein dreiflügliges Messerblatt 19 gezeigt, in Fig. 4 ein zweiflügliges Messerblatt 20. Auch bei diesen Messerblättern nach den Figuren 3 und 4 muss ein qualitativ hochwertiges, präzise ausgewuchtetes Bauteil verwendet werden, damit das volle Betriebsfeld des Motors 5 genutzt werden kann. Treten erhöhte Vibrationen auf, z. B. aufgrund minderwertiger Messerblätter, wird zum Schutz der Bedienungsperson 6 das Betriebsfeld (Fig. 2) eingeschränkt, und es ist ein Betrieb des Verbrennungsmotors 5 nur im ersten, unteren Betriebsmodus I bei abgesenkter Drehzahl n₀ und abgesenkter Leistung P₀ möglich.

Es ist zweckmäßig, zur Erkennung des verwendeten Messerblattes eine Leseeinheit 21 am Arbeitsgerät vorzusehen, um z. B. eine Kennung des am Arbeitsgerät montierten Arbeitswerkzeugs 13 zu erfassen. Im gezeigten Ausführungsbeispiel ist die Leseeinheit 21 im Bereich des Getriebekopfes 3 des Freischneiders 1 vorgesehen und insbesondere als RFID-Sende- und -Empfangseinheit ausgestaltet. Die Leseeinheit 21 ist mit der Erfassungseinheit 16 verbunden und übermittelt der Erfassungseinheit 16 die Daten des montierten Werkzeugs 13. Hierzu trägt das Werkzeug zweckmäßig einen RFID-Tag 22, der von der drehfest am Arbeitsgerät gehaltenen Leseeinheit 21 ausgelesen wird. Hierzu ist der RFID-Tag 22 zweckmäßig im Klemmbereich 23 des Arbeitswerkzeugs 13 am Arbeitswerkzeug selbst festgelegt. Tritt der RFID-Tag 22 in den Erfassungsbereich der Leseeinheit ein, wird über dessen Antenne in den RFID-Tag 22 Energie eingespeist, so dass dieser in der Lage ist, seine Daten der Leseeinheit 21 drahtlos zu übermitteln. Diese Daten werden drahtlos oder - wie im Ausführungsbeispiel gezeigt - über die Signalleitung 24 der Erfassungseinheit 16 mitgeteilt und dort ausgewertet. Ist ein qualitätsmäßig hochwertiges, präzise ausgewuchtetes Werkzeug 13 verbaut, trägt es die entsprechende Kennung, wird über die Leseeinheit 21 erkannt und die Kennung der Erfassungseinheit 16 mitgeteilt. Diese überprüft die gelesene Kennung mit Daten eines Datenspeichers, der in der Erfassungseinheit 16 vorgesehen ist und die Kennungen der für das Arbeitsgerät zugelassenen Arbeitswerkzeuge 13 enthält. Ist die gelesene Kennung des montierten Blattes 12 eine zugelassene Kennung, wird der Motor 15 in der gesamten Betriebskurve betrieben; dem Benutzer steht die volle Leistung des Arbeitsgerätes zur Verfügung.

Liegt die Kennung des verbauten Messerblattes 12 außerhalb der registrierten Kennungen der Erfassungseinheit 16, wird die Betriebskurve auf den ersten, unteren Betriebsmodus I eingeschränkt. Die Drehzahl und die Leistung sind abgesenkt.

Die Anordnung kann auch dazu verwendet werden, den Motor entsprechend dem verwendeten Messerblatt 12, 19, 20 in seiner Betriebskurve zu steuern. Über die Leseeinheit 21 wird die Kennung des verwendeten Messerblattes 12, 19, 20 (Figuren 3 und 4) ausgelesen, mit den in der Erfassungseinheit 16 abgespeicherten Daten verglichen und entsprechend den im Speicher der Erfassungseinheit 16 vorgegebenen Kennwerten eine Betriebskurve (Fig. 2) des Verbrennungsmotors 5 gesteuert.

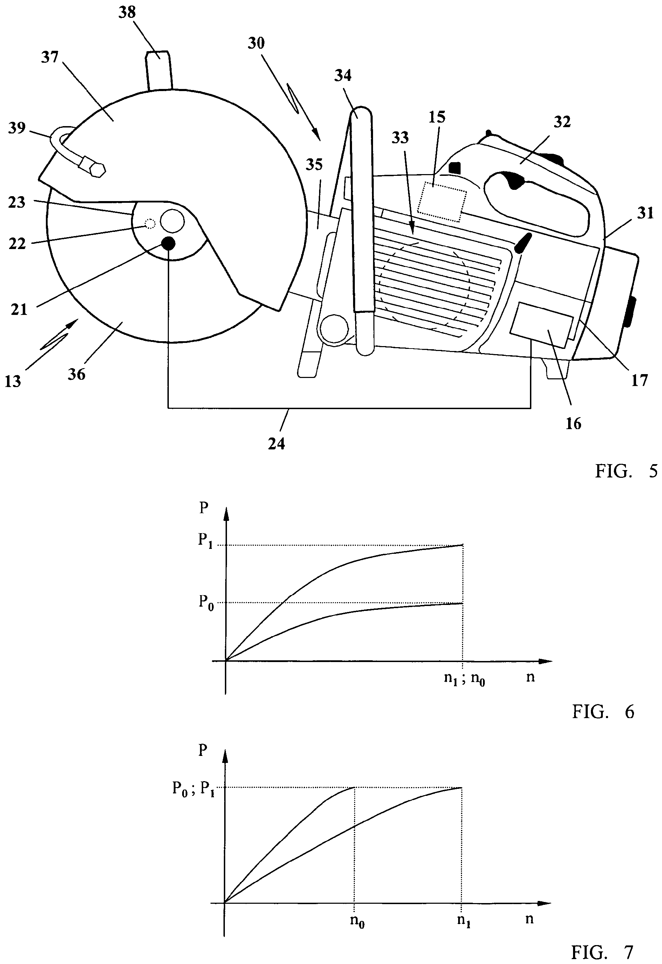

Im Ausführungsbeispiel nach Fig. 5 ist als Arbeitsgerät ein Trennschleifer 30 dargestellt, der einen in einem Gehäuse 31 angeordneten Elektromotor oder Verbrennungsmotor 33 aufweist. Zur Steuerung des Motors 33 ist die Steuereinheit 15 vorgesehen, die nach einer motorspezifischen Betriebskurve (Fig. 2) die Drehzahl und/oder die Leistung des Motors 33 bestimmt. Dies kann bei einem Verbrennungsmotor durch Änderung der Zusammensetzung des Kraftstoff/Luft-Gemisches erfolgen und/oder durch Änderung des Zündzeitpunktes bzw. Verstellung des Zündzeitpunktes. Entsprechend wird ein Elektromotor durch Beeinflussung von Strom und Spannung gesteuert.

Zur Führung des Trennschleifers 30 sind ein in Längsrichtung ausgerichteter Bedienhandgriff 32 sowie ein diesem vorgelagerter Bügelgriff 34 vorgesehen. An einem Ausleger 35 ist eine Trennscheibe 36 gehalten, der eine Schutzhaube 37 mit einem Verstellknauf 38 zugeordnet ist. Beidseitig der Trennscheibe 36 ist in der Schutzhaube 37 eine Wasserzuführung 39 vorgesehen, um den beim Schnitt entstehenden Staub zu binden und die Scheibe zu kühlen.

Die Trennscheibe 36 wird über einen im Ausleger 35 laufenden Riemen angetrieben und erreicht Umdrehungsgeschwindigkeiten von 8.000 bis 10.000 Umdrehungen pro Minute. Dabei ist die Trennscheibe 36 hohen Fliehkräften ausgesetzt, weshalb nur hochwertige, präzise ausgewuchtete Trennscheiben für derartige Arbeitsgeräte zulässig sind.

Um sicherzustellen, dass mit dem Arbeitsgerät nur hochwertige Trennscheiben im maximalen Leistungsbereich betrieben werden, ist im Klemmbereich 23 der Trennscheibe 36 ein RFID-Tag 22 vorgesehen, dem - vorzugsweise am Ausleger 35 festgelegt - eine Leseeinheit 21 drehfest zugeordnet ist. Über die Leseeinheit 21 wird die im RFID-Tag 22 gespeicherte Kennung der aufgespannten Trennscheibe 36 der Erfassungseinheit 16 mitgeteilt, die in Abhängigkeit von einem Vergleich mit den abgespeicherten Kennwerten der als zulässig freigegebenen Trennscheiben aus einem Speicherbaustein die Betriebskurve des Antriebsmotors - wie vorstehend beschrieben - über den vollen Leistungsbereich nutzt (zweiter Betriebsmodus II) oder die Leistungsabgabe des Motors 33 auf den ersten, unteren Betriebsmodus I einschränkt, wenn eine minderwertige Trennscheibe 36 aufgespannt ist, deren gelesene Kennung keiner der abgespeicherten Kennungen entspricht.

In den Figuren 6 und 7 sind Alternativen der Ausgestaltung der unterschiedlichen Betriebsmodi gezeigt. Während im Ausführungsbeispiel nach Fig. 2 die Betriebsmodi I und II sich in Leistung und Drehzahl unterscheiden, ist nach dem Ausführungsbeispiel in Fig. 6 vorgesehen, im Betriebsmodus I eine abgesenkte Leistung P₀ bei einer Drehzahl n₀ und im Betriebsmodus II eine erhöhte, z. B. maximale Leistung P₁, bei einer Drehzahl n₁ vorzusehen, wobei die Drehzahlen n₀ und n₁ gleich sein können.

Im Ausführungsbeispiel nach Fig. 7 ist die Ausgestaltung der Betriebsmodi derart gewählt, dass im Betriebsmodus I eine abgesenkte Leistung P₀ bei einer Drehzahl n₀ und im Betriebsmodus II eine erhöhte, z. B. maximale Leistung P₁, bei einer Drehzahl n₁ vorzusehen, wobei die Leistung P₀ und P₁ gleich sein kann.

## Patentansprüche

1. Handgeführtes, tragbares Arbeitsgerät mit einem Motor (5, 33) zum Antrieb eines auswechselbaren Arbeitswerkzeugs (13), und mit einer Steuereinheit (15) zur Steuerung des Betriebs des Motors (5, 33), wobei die Steuereinheit (15) die Drehzahl (n) und/oder die Leistung (P) des Motors (5, 33) bestimmt, wobei der Motor (5, 33) von der Steuereinheit (15) in einem ersten Betriebsmodus (I) mit im Vergleich zu einem weiteren Betriebsmodus (II) verringerter Drehzahl (n₀) und/oder verringerter Leistung (P₀) und in dem weiteren Betriebsmodus (II) mit im Vergleich zum ersten Betriebsmodus (I) einer erhöhten Drehzahl (n₁) und/oder einer erhöhten Leistung (P₁) betreibbar ist, und wobei die Steuereinheit (15) mit einer Erfassungseinheit (16) verbunden ist, die eine Leseeinheit (21) aufweist, welche eine Kennung des am Arbeitsgerät montierten Arbeitswerkzeugs (13) erfasst, wozu das Arbeitswerkzeug (13) einen RFID-Tag (22) trägt, und abhängig von einer Auswertung des RFID-Tags (22) ein Freigabesignal gebildet ist, und die Steuereinheit (15) derart ausgebildet ist, dass in Abhängigkeit des Freigabesignals ein zugeordneter Betriebsmodus (I, II) eingestellt ist, wobei die Leseeinheit (21) eine RFID-Sendeeinheit und RFID-Empfangseinheit ist, welche am Arbeitsgerät drehfest angeordnet ist, und das Steuergerät (15) derart ausgebildet ist, dass es bei fehlendem Freigabesignal in einen Sicherheitsmodus schaltet, und der Sicherheitsmodus dem Betriebsmodus (I) mit abgesenkter Drehzahl (n₀) und/oder abgesenkter Leistung (P₀) entspricht, wobei der Motor in dem ersten Betriebsmodus (I) ausschließlich mit abgesenkter Drehzahl (n₀) und/oder abgesenkter Leistung (P₀) zu betreiben ist.

2. Arbeitsgerät nach Anspruch 1,
**dadurch gekennzeichnet, dass** die erfasste Kennung mit einer vorgegebenen Kennung verglichen und abhängig vom Vergleich das Freigabesignal gebildet und der Betriebsmodus (I, II) gewählt ist.

3. Arbeitsgerät nach Anspruch 1 oder 2,
**dadurch gekennzeichnet, dass** eine vorgegebene Kennung in einem Speicherbaustein, insbesondere in einem Speicherbaustein der Erfassungseinheit (16) abgelegt ist.

4. Arbeitsgerät nach einem der Ansprüche 1 bis 3,
**dadurch gekennzeichnet, dass** das Steuergerät (15) ausschließlich zwei Betriebsmodi (I, II) aufweist und zwischen den beiden Betriebsmodi (I, II) umschaltet.

5. Arbeitsgerät nach einem der Ansprüche 1 bis 4, **dadurch gekennzeichnet, dass** das Arbeitsgerät eine Motorkettensäge, ein Trennschleifer, ein Freischneidegerät oder dgl. handgeführtes, tragbares Arbeitsgerät ist.

6. System aus einem Arbeitsgerät nach Anspruch 1, 4 oder 5 und einem auswechselbarem Arbeitswerkzeug (13),
**dadurch gekennzeichnet, dass** das Arbeitswerkzeug (13) ein rotierendes Werkzeug (13) ist und der RFID-Tag (22) innerhalb des Klemmbereichs (23) des rotierenden Werkzeugs (13) angeordnet ist.

## Claims

1. Manually operated portable working device comprising a motor (5, 33) for driving an interchangeable working tool (13), and comprising a control unit (15) for controlling the operation of the motor (5, 33), wherein the control unit (15) determines the rotational speed (n) and/or the output (P) of the motor (5, 33), wherein the motor (5, 33) can be operated by the control unit (15) in a first operating mode (I) with a reduced rotational speed (n₀) and/or a reduced output (P₀) as compared with a further operating mode (II), and in the further operating mode (II) with an increased rotational speed (n₁) and/or an increased output (P₁) as compared with the first operating mode (I), and wherein the control unit (15) is connected to a detection unit (16) which has a reading unit (21) which detects an identifier of the working tool (13) mounted on the working device, for which purpose the working tool (13) bears an RFID tag (22) and, depending on an evaluation of the RFID tag (22), an enable signal is formed, and the control unit (15) is designed in such a way that, depending on the enable signal, an associated operating mode (I, II) is set, wherein the reading unit (21) is an RFID transmitting unit and an RFID receiving unit, which is arranged on the working device in a rotationally fixed manner, and the control device (15) is designed in such a way that, when the enable signal is absent, it switches into a safety mode, and the safety mode corresponds to the operating mode (I) with a lowered rotational speed (n₀) and/or a lowered output (P₀), wherein, in the first operating mode (I), the motor is to be operated exclusively with the lowered rotational speed (n₀) and/or lowered output (P₀).

2. Working device according to claim 1,
**characterized in that** the detected identifier is compared with a predefined identifier and, depending on the comparison, the enable signal is formed and the operating mode (I, II) is selected.

3. Working device according to claim 1 or 2,
**characterized in that** a predefined identifier is stored in a memory module, in particular in a memory module of the detection unit (16).

4. Working device according to one of claims 1 to 3,
**characterized in that** the control device (15) has only two operating modes (I, II) and switches between the two operating modes (I, II).

5. Working device according to one claims 1 to 4,
**characterized in that** the working device is a motor chainsaw, an angle grinder, a brush-cutter or a similar manually operated portable working device.

6. System comprising a working device according to claim 1, 4 or 5 and an interchangeable working tool (13),
**characterized in that** the working tool (13) is a rotating tool (13), and the RFID tag (22) is arranged within the clamping region (23) of the rotating tool (13).

## Revendications

1. Appareil de travail portatif manuel, comprenant un moteur (5, 33) pour entraîner un outil de travail interchangeable (13), et une unité de commande (15) pour commander le fonctionnement du moteur (5, 33), l'unité de commande (15) déterminant la vitesse de rotation (n) et/ou la puissance (P) du moteur (5, 33), dans lequel l'unité de commande (15) peut faire fonctionner le moteur (5, 33) dans un premier mode de fonctionnement (1) à une vitesse de rotation réduite (n₀) et/ou à une puissance réduite (P₀) en comparaison avec un autre mode de fonctionnement (II), et peut le faire fonctionner dans l'autre mode de fonctionnement (II) à une vitesse de rotation augmentée (n₁) et/ou à une puissance augmentée (P₁) en comparaison avec le premier mode de fonctionnement (1), et dans lequel l'unité de commande (15) est reliée à une unité de détection (16) qui présente une unité de lecture (21) qui détecte un identifiant de l'outil de travail (13) monté sur l'appareil de travail (13), outil de travail (13) portant à cet effet une étiquette RFID (22), et un signal de déblocage est généré en fonction d'une évaluation de l'étiquette RFID (22), et l'unité de commande (15) est réalisée de telle sorte qu'un mode de fonctionnement associé (I, II) est réglé en fonction du signal de déblocage, dans lequel l'unité de lecture (21) est une unité d'émission RFID et une unité de réception RFID qui est disposée de manière verrouillée en rotation sur l'appareil de travail, et l'appareil de commande (15) est réalisé de telle sorte qu'en l'absence du signal de déblocage, il commute sur un mode sécurité, et le mode sécurité correspond au mode de fonctionnement (1) à vitesse de rotation abaissée (n₀) et/ou à puissance abaissée (P₀), dans lequel le moteur doit fonctionner dans le premier mode de fonctionnement (1) exclusivement à vitesse de rotation abaissée (n₀) et/ou à puissance abaissée (P₀).

2. Appareil de travail selon la revendication 1,
**caractérisé en ce que** l'identifiant détecté est comparé à un identifiant prédéfini, et le signal de déblocage est généré et le mode de fonctionnement (I, II) est choisi en fonction de la comparaison.

3. Appareil de travail selon la revendication 1 ou 2,
**caractérisé en ce qu'**un identifiant prédéfini est stocké dans un module de mémoire, en particulier dans un module de mémoire de l'unité de détection (16).

4. Appareil de travail selon l'une quelconque des revendications 1 à 3,
**caractérisé en ce que** l'appareil de commande (15) ne présente que deux modes de fonctionnement (I, II) et commute entre les deux modes de fonctionnement (I, II).

5. Appareil de travail selon l'une quelconque des revendications 1 à 4,
**caractérisé en ce que** l'appareil de travail est une tronçonneuse à chaîne, une tronçonneuse à meule, une débroussailleuse ou un appareil de travail portatif manuel similaire.

6. Système composé d'un appareil de travail selon la revendication 1, 4 ou 5 et d'un outil de travail interchangeable (13),
**caractérisé en ce que** l'outil de travail (13) est un outil rotatif (13), et l'étiquette RFID (22) est disposée à l'intérieur de la zone de serrage (23) de l'outil rotatif (13).
